(19) Europäisches Patentamt
European Patent Office
Office européen des brevets

(11) Veröffentlichungsnummer: **0 007 050**
**B1**

(12) **EUROPÄISCHE PATENTSCHRIFT**

(45) Veröffentlichungstag der Patentschrift: **09.02.83**

(51) Int. Cl.³: **C 08 G 18/22**, C 07 F 9/38

(21) Anmeldenummer: **79102208.0**

(22) Anmeldetag: **02.07.79**

(54) **Verfahren zur Herstellung von Polyisocyanuratkunststoffen, sowie Phosphonat-Salze.**

(30) Priorität: **14.07.78 DE 2830949**

(43) Veröffentlichungstag der Anmeldung: **23.01.80 Patentblatt 80/2**

(45) Bekanntmachung des Hinweises auf die Patenterteilung: **09.02.83 Patentblatt 83/6**

(84) Benannte Vertragsstaaten: **BE DE FR GB IT**

(56) Entgegenhaltungen:
**US-A-4 092 276**
**Experimental Parasitology, New York 1953, 2, S. 366—373**

(73) Patentinhaber: **BAYER AG, Zentralbereich Patente, Marken und Lizenzen, D-5090 Leverkusen 1, Bayerwerk (DE)**

(72) Erfinder: **Haas, Peter, Dr., Zwengenberger Strasse 43, D-5657 Haan 1 (DE)**
Erfinder: **Wiedermann, Rolf, Dr., Schmillenburg 9, D-5060 Bergisch-Gladbach 2 (DE)**

**EP 0 007 050 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Polyisocyanuratkunststoffen, sowie Phosphonat-Salze

Es sind bereits zahlreiche Katalysatoren für die Herstellung von Isocyanatkunststoffen bekanntgeworden. Mit den bekannten Katalysatoren gelang es jedoch bisher nicht befriedigend, das Problem des Fließverhaltens von schäumfähigen Polyisocyanurat-Reaktionsgemischen zu lösen. Es hat sich nämlich gezeigt, daß das zum Polyisocyanuratschaumstoff führende Reaktionsgemisch vielfach ein unzureichendes Fließvermögen besitzt, so daß bei der Verschäumung in Formen Hohlräume und Ecken oft nur mangelhaft ausgefüllt werden.

Überraschenderweise wurde gefunden, daß mit den erfindungsgemäßen Katalysatoren das Fließverhalten von Polyisocyanurat-Schaumstoffen wesentlich verbessert werden kann.

Gegenstand der Erfindung ist daher ein Verfahren zur Herstellung von Isocyanuratgruppen und gegebenenfalls Urethangruppen aufweisenden Kunststoffen einschließlich Schaumstoffen durch Trimerisierung von Polyisocyanaten mit Hilfe von Isocyanat-Trimerisationskatalysatoren, gegebenenfalls in Gegenwart von Treibmitteln, Schaumstabilisatoren und weiteren Zusatzstoffen, gegebenenfalls in Gegenwart eines Unterschusses von mindestens zwei Hydroxylgruppen aufweisenden Polyhydroxylverbindungen vom Molekulargewicht 400 bis 10 000, sowie gegebenenfalls Kettenverlängerungsmitteln mit einem Molekulargewicht von 32 bis 400, dadurch gekennzeichnet, daß als Trimerisierungskatalysatoren Phosphonate der allgemeinen Formel

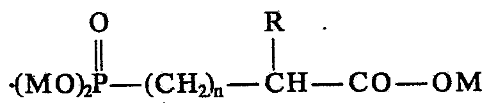

(I)

in der

n eine ganze Zahl von 1—3,
R H oder $-(CH_2)_m-COOM$,
m eine ganze Zahl von 0—3,
M ein Alkalimetall, bevorzugt Na oder K, oder $NR'_4$
R' H oder ein $C_1-C_4$-Alkylrest ist,

und/oder der allgemeinen Formel

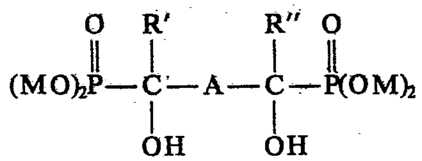

(II)

in der

A $-(CH_2)_x-$ oder $C_6-C_{10}$-Arylen, bevorzugt Phenylen,
x eine ganze Zahl von 0—5,
R' und R'' gleich oder verschieden sind und H oder einen $C_1-C_4$-Alkylrest und
M Alkalimetall, bevorzugt Na oder K, oder $NR'_4$ darstellen,

verwendet werden.

Gegenstand der Erfindung sind ferner Phosphonate der allgemeinen Formel

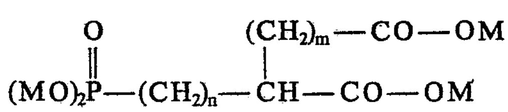

(III)

in der

n eine ganze Zahl von 1—3,
m eine ganze Zahl von 0—3,
M ein Alkalimetall, bevorzugt Na oder K, oder $NR'_4$
R' H oder ein $C_1-C_4$-Alkylrest ist

und der allgemeinen Formel

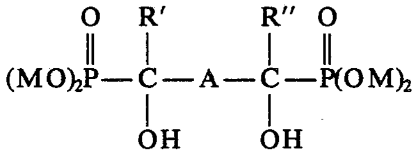 (II)

in der

A $-(CH_2)_x$ oder $C_6-C_{10}$-Arylen, bevorzugt Phenylen,
x eine ganze Zahl von 0—5,
R′ und R″ gleich oder verschieden sind und H oder einen $C_1-C_4$-Alkylrest und
M ein Alkalimetall, bevorzugt Na oder K, oder $NR'_4$ darstellen.

Die Herstellung der Verbindungen I, bzw. III und II erfolgt auf an sich bekannte Weise:

Die Verbindungen der allgemeinen Formel I bzw. III werden z. B. durch Addition von Dialkylphosphiten, z. B. von Dimethylphosphit, Diäthylphosphit, Dipropylphosphit an $\alpha,\beta$-ungesättigte Carbonylverbindungen, z. B. von Maleinsäure-di-($C_1-C_4$-alkyl)-estern, Itaconsäure-di-($C_1-C_4$-alkyl)-estern, Acetylaceton und Hydroxylyse der resultierenden Phosphonsäureester erhalten.

Durch Addition von Dialkylphosphiten, z. B. der obengenannten Art, an Dicarbonylverbindungen, z. B. Butandion, Pentandion, Hexandion, 1,4-Diformylbenzol entstehen in glatter Reaktion bifunktionelle $\alpha$-Hydroxyphosphonsäureester, die durch Hydroxylyse in Verbindungen der allgemeinen Formel II übergehen.

Die Hydroxylyse erfolgt z. B. durch Erhitzen der gebildeten Ester mit z. B. äquivalenten Mengen der entsprechenden Alkalihydroxide oder Ammoniumhydroxide, z. B. in methanolischer Lösung. Die Verbindungen I und II sind Li-, Na-, K-, Rb-, Cs-Salze, bevorzugt Na- oder K-Salze sowie Ammoniumsalze.

Beispiele für die neuen Verbindungen II und III sind z. B.

bevorzugt

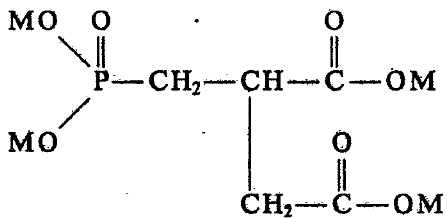

bevorzugt

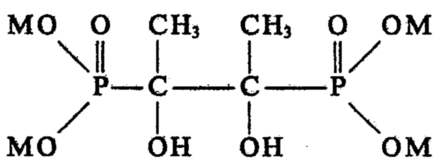

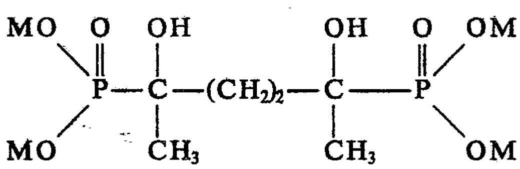

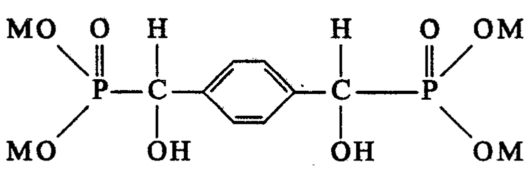

bevorzugt

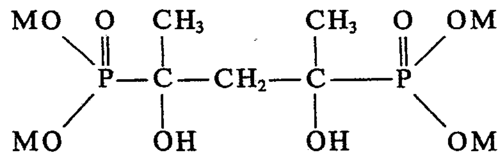

bevorzugt M, Na oder K.

Die erfindungsgemäß verwendeten Verbindungen der allgemeinen Formel I und II werden in der Regel in einer Menge von 0,01—20 Gew.-%, vorzugsweise 0,1—10 Gew.-%, bezogen auf die nachstehend genannten Polyisocyanate als Katalysator bei der Herstellung von Polyisocyanurat-Kunststoffen eingesetzt, bevorzugt als Lösungen in höherfunktionellen Alkoholen wie Äthylenglykol, Diäthylenglykol, Dipropylenglykol und Tripropylenglykol.

Für die Herstellung der Isocyanuratgruppen aufweisenden Kunststoffe werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2—4, vorzugsweise 2, und

Q einen aliphatischen Kohlenwasserstoffrest mit 2—18, vorzugsweise 6—10 C-Atomen, einen cycloaliphatischen Kohlenwasserstoffrest mit 4—15, vorzugsweise 5—10 C-Atomen, einen aromatischen Kohlenwasserstoffrest mit 6—15, vorzugsweise 6—13 C-Atomen, oder einen araliphatischen Kohlenwasserstoffrest mit 8—15, vorzugsweise 8—13 C-Atomen,

bedeuten, z. B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 10 92 007 (US-Patentschrift 31 52 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der

vorgenannten Polyisocyanate zu verwenden.

Bevorzugte Polyisocyanate sind:

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen, Allophanatgruppen, Isocyanuratgruppen, Harnstoffgruppen oder Biuretgruppen aufweisenden Polyisocyanate (»modifizierte Polyisocyanate«), insbesondere solche modifizierte Polyisocyanate, die sich vom 2,4- und/oder 2,6-Toluylendiisocyanat bzw. vom 4,4'- und/oder 2,4'-Diphenylmethandiisocyanat ableiten.

2. Als gegebenenfalls zu verwendende Ausgangskomponenten ferner Verbindungen mit mindestens zwei gegenüber Isocyanaten reaktionsfähigen Wasserstoffatomen von einem Molekulargewicht in der Regel von 400—10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 5000, vorzugsweise 800 bis 3000, z. B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind und wie sie z. B. in der DE-OS 2 922 967, S. 17—24, beschrieben werden.

Vertreter der genannten erfindungsgemäß zu verwendenden Verbindungen sind z. B. auch in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 400—10 000, z. B. Mischungen von Polyäthern und Polyestern, eingesetzt werden.

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Sie sind z. B. in der DE-OS 2 922 967, S. 25—31, beschrieben.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

5. Gegebenenfalls als Hilfs- und Zusatzmittel:

a) Wasser und/oder leicht flüchtige anorganische oder organische Substanzen als Treibmittel,
b) Zusätzliche Katalysatoren der an sich bekannten Art in Mengen bis zu 50 Gew.-%, bezogen auf die erfindungsgemäß einzusetzenden Katalysatoren, (die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt)
c) Oberflächenaktive Zusatzstoffe, wie Emulgatoren und Schaumstabilisatoren,
d) Reaktionsverzögerer, Zellregler der an sich bekannten Art, Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Alle diese Hilfs- und Zusatzmittel werden z. B. in der DE-OS 2 922 967, S. 32—37, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch Band VII, herausgegeben von Vieweg und Höchtlen, Carl-Hanser-Verlag, München 1966, z. B. auf den Seiten 103 bis 113 beschrieben.

## Durchführung des erfindungsgemäßen Verfahrens

Die Reaktionskomponenten werden erfindungsgemäß nach dem an sich bekannten Einstufenverfahren, dem Prepolymerverfahren oder dem Semiprepolymerverfahren zur Umsetzung gebracht,

wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter »over-charging« gearbeitet; eine derartige Verfahrensweise ist z. B. aus den US-Patentschriften 3 178 490 und 3 182 104 bekannt.

Bei der Formverschäumung werden vielfach an sich bekannte »äußere Trennmittel«, wie Siliconöle, mitverwendet. Man kann aber auch sogenannte »innere Trennmittel«, gegebenenfalls im Gemisch mit äußeren Trennmitteln, verwenden, wie sie z. B. aus den DE-Offenlegungsschriften 2 121 670 und 2 307 589 bekanntgeworden sind.

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z. B. als Dämmplatten für die Dachisolierung Anwendung.

### Beispiel 1a

#### Kaliumsalz der Hydroxycarbonyläthanphosphonsäure

238 g (1 Mol) β-Methoxycarbonyläthanphosphonsäuredimethylester (Darstellung nach A. N. Pudovik, Z. obsc. Chim. 22, 473 (1972) C. A. 47, 2687 (1953) in K. Sasse in Houben-Weyl, Bd. XII/1, 467) werden in 500 ml Methanol und 168 g (3 Mol) KOH getropft, 20 Stunden zum Rückfluß erhitzt, anschließend eingeengt und getrocknet.

Ausbeute quantitativ; farbloses hygroskopisches Pulver von leichter Löslichkeit in Äthylenglykol und Diäthylenglykol.

### Beispiel 1b

#### Natriumsalz der Hydroxycarbonyläthanphosphonsäure

238 g (1 Mol) β-Methoxycarbonyläthanphosphonsäuredimethylester werden in 500 ml Methanol und 120 g (3 Mol) NaOH getropft, 20 Stunden zum Rückfluß erhitzt, anschließend eingeengt und getrocknet.

Ausbeute quantitativ eines farblosen, hygroskopischen Pulvers von leichter Löslichkeit in Äthylenglykol und Diäthylenglykol.

### Beispiel 2a

#### β,γ-Bis-(methoxycarbonyl)-propanphosphonsäuredimethylester

Zu 158 g (1 Mol) Itaconsäuredimethylester und 110 g Dimethylphosphit werden bei 60° C 8 ml einer 30%igen Na-Methylat-Lösung getropft; danach ist die exotherme Reaktion beendet. Man rührt eine Stunde bei 100° C nach und engt ein.

Ausbeute quantitativ einer farblosen Flüssigkeit

Analyse für $C_9H_{17}O_7P$ (268)

| | | | |
|---|---|---|---|
| ber. | C 40,3 | H 6,35 | P 11,6% |
| gef. | C 40,5 | H 6,5 | P 11,7% |

## Beispiel 2

### Kaliumsalz der β,γ-Bis-(hydroxycarbonyl)-propanphosphonsäure

268 g (1 Mol) β,γ-Bis-(methoxycarbonyl)-propanphosphonsäuredimethylester werden zu einer Lösung von 224 g (4 Mol) KOH in 600 ml Methanol getropft und für 20 Stunden zum Rückfluß erhitzt. Men engt ein und trocknet.

Ausbeute quantitativ eines farblosen, hygroskopischen Pulvers von glatter Löslichkeit in mono- sowie höherfunktionellen niederen Alkoholen.

## Beispiel 3a

### 2,4-Dihydroxy-pentan-diphosphonsäuredimethylester-(2,4)

Zu 100 g (1 Mol) Acetylaceton und 220 g (2 Mol) Dimethylphosphit werden 15 ml einer 30%igen Na-Methylat-Lösung getropft; dann ist die exotherme Reaktion beendet. Man rührt 2 Stunden bei 80° nach und engt ein.

Ausbeute quantitativ einer viskosen Flüssigkeit

Analyse für $C_9H_{22}O_8P_2$ (220)

| | | | |
|---|---|---|---|
| ber. | C 33,7 | H 6,8 | P 19,4% |
| gef. | C 33,0 | H 6,3 | P 19,8% |

## Beispiel 3b

### Kaliumsalz der 2,4-Dihydroxy-pentan-diphosphonsäure-(2,4)

220 g (1 Mol) 2,4-Dihydroxy-pentan-diphosphonsäuredimethylester-(2,4) werden in eine Lösung von 600 ml Methanol und 224 g (4 Mol) KOH getropft und 20 Stunden zum Rückfluß erhitzt; man engt ein und trocknet.

Ausbeute quantitativ eines farblosen, hygroskopischen Pulvers von glatter Löslichkeit in Äthylenglykol sowie Diäthylenglykol.

## Beispiel 4a

### 2,3-Dihydroxy-butan-diphosphonsäuredimethylester-(2,3)

In 172 g (2 Mol) Diacetyl und 440 g (4 Mol) Dimethylphosphit werden insgesamt 50 ml einer 3%igen Natriummethylat-Lösung getropft; nach Abklingen der exothermen Reaktion wird 1 Stunde auf 80° gehalten und anschließend in Vakuum von niederflüchtigen Anteilen befreit.

Ausbeute 540 g, entsprechend 87% der Theorie

Analyse für $C_8H_{20}O_8P_2$ (306)

| | | | |
|---|---|---|---|
| ber. | C 31,4 | H 6,5 | P 20,9% |
| gef. | C 31,3 | H 6,2 | P 19,8% |

## Beispiel 4b

### Kaliumsalz der 2,3-Dihydroxy-butan-diphosphonsäure-(2,3)

153 g (0,5 Mol) 2,3-Dihydroxy-butan-diphosphonsäure-dimethylester-(2,3) werden in 100 ml Methanol und 112 g (2 Mol) Kaliumhydroxid 20 Stunden zum Rückfluß erhitzt. Man engt ein und trocknet. Ausbeute quantitativ, leicht löslich in niederen mono- und höherfunktionellen Alkoholen.

## Beispiel 5a

### 1,4-Phenylen-bis-(hydroxymethanphosphonsäuredimethylester)

In 110 g (1 Mol) Dimethylphosphit, 67 g (0,5 Mol) Terephthalaldehyd und 200 ml Dimethylformamid, werden 20 ml einer 3%igen Natriummethylat-Lösung bei ca. 80°C getropft; nach Abklingen der

exothermen Reaktion wird 1 Stunde auf 80° belassen, abgekühlt, abgesaugt und getrocknet.
Ausbeute 145 g, entsprechend 82% der Theorie, Schmelzpunkt 200° C

Analyse für $C_{12}H_{20}O_8P_2$ (354)

| | | | |
|---|---|---|---|
| ber. | C 40,7 | H 5,65 | P 17,5% |
| gef. | C 40,0 | H 6,1 | P 16,9% |

Beispiel 5b

Kaliumsalz der 1,4-Phenylen-bis-(hydroxymethylphosphonsäure)

177 g (0,5 Mol) 1,4-Phenylen-bis-(hydroxymethanphosphonsäuredimethylester in 500 ml Methanol und 112 g (2 Mol) Kaliumhydroxid werden 20 Stunden zum Rückfluß erhitzt. Men engt ein und trocknet. Ausbeute quantitativ, leicht löslich in niederen mono- und höherfunktionellen Alkoholen.

Beispiel 6

Es wird eine Polyolmischung aus 17 Gew.-Teilen eines Zuckerpolyäthers einer Hydroxylzahl 380 und einer Funktionalität von 4,7, der durch Addition von Propylenoxid an ein Gemisch von Zucker und Wasser erhalten worden ist, 4 Gew.-Teilen eines Polyäthers einer Hydroxylzahl von 650, der ein Addukt von Propylenoxid an Äthylendiamin darstellt, 10 Gew.-Teilen eines Polyesters einer Hydroxylzahl von 200, und einer Funktionalität von 3, der durch Kondensation von Adipinsäure, Propylenglykol und Glycerin erhalten wurde, 1 Gew.-Teil eines handelsüblichen Siliconstabilisators und 14 Gew.-Teile Trichloräthylphosphat hergestellt.

45 Gew.-Teile dieser Mischung werden mit 25 Gew.-Teile Trichlorfluormethan und 2,5 Gew.-Teilen des Katalysators gemäß Beispiel 1b vorgemischt und mit 100 Gew.-Teilen eines rohen Diphenylmethandiisocyanates, hergestellt durch Anilin-Formaldehyd-Kondensation und nachfolgende Phosgenierung, NCO-Gehalt 31%, auf einer Verdüsungsmaschine des Typs HK 100 der Firma Maschinenfabrik Henneke, Birlinghoven, vermischt und auf das Papier einer Doppeltransportbandanlage aufgetragen. Es werden bekannter Weise Doppeltransportbandplatten hergestellt. Die Startzeit beträgt 10 sec, die Abbindezeit 30 sec, die Rohdichte des fertigen Schaumstoffes 35 kg/m³. Die Platten finden Verwendung zur Dachisolierung. Der Schaumstoff ist homogen und zeigt keine Farbschattierungen.

Beispiel 7

(Vergleichsbeispiel)

Es wird wie in Beispiel 6 gearbeitet, nur werden die 2,5 Gew.-Teile des Katalysators gemäß Beispiel 1b durch 2 Gew.-Teile einer 30%igen Kaliumacetat-Lösung in Diäthylenglykol ersetzt.

Das Schaumgemisch hat eine Startzeit von 14 Sekunden und eine Abbindezeit von 29 Sekunden, das Steigverhalten ist deutlich ungünstiger. Der Schaumstoff in den fertigen Platten zeigt starke Farbschattierungen und unter der oberen Deckschicht sind zahlreiche Lunker, die aus dem ungünstigen Steigverhalten resultieren.

Beispiel 8

Es wird wie in Beispiel 6 gearbeitet, nur werden 0,5 Gew.-Teile des Katalysators gemäß Beispiel 1b durch 0,2 Gew.-Teile Dimethylcyclohexylamin ersetzt. Der erfindungsgemäß zu verwendende Katalysator wird somit teilweise durch einen bekannten ersetzt.

Die Startzeit beträgt 9 Sekunden, die Abbindezeit 30 Sekunden die Eigenschaften der Schaumstoffplatten entsprechen der aus Beispiel 6.

Beispiel 9

Es wird eine Polyolmischung aus 10 Gew.-Teilen eines Polyäthers, erhalten durch Addition von Propylenoxid, an Sorbit Hydroxylzahl 500, 10 Gew.-Teilen eines Polyäthers einer Hydroxylzahl von 56, der ein Addukt von Propylenoxid an Propylenglykol darstellt, 10 Gew.-Teilen Diphenylkresylphosphat, 0,2 Gew.-Teilen Wasser und 0,2 Gew.-Teilen des Siliconstabilisators aus Beispiel 7 hergestellt.

Diese Mischung wird mit 100 Gew.-Teilen Isocyanat aus Beispiel 6 und und 8 Gew.-Teilen des

Katalysators gemäß Beispiel 1b intensiv verrührt.

Die Startzeit beträgt 80 Sekunden, die Abbindezeit 240 Sekunden. Man erhält einen Schaumstoff mit Rohdichte 150 kg/$m^3$, der z. B. in Form von geschnittenen Platten für die Isolierung von Böden in Tiefkühlhäusern verwendet werden kann.

### Beispiel 10

40 Gew.-Teile der Polyolmischung aus Beispiel 6 werden mit 20 Gew.-Teilen Trichlorfluormethan und 3 Gew.-Teilen des Katalysators gemäß Beispiel 2b vorgemischt und mit 100 Gew.-Teilen eines Präpolymers, hergestellt aus 95 Gew.-% des Isocyanates aus Beispiel 6 und 5 Gew.-% Tetrapropylenglykol (NCO-Gehalt des Präpolymeren: 28%), 20 Sekunden intensiv vermischt.

Die Startzeit beträgt 60 Sekunden, die Abbindezeit 125 Sekunden. Man erhält einen Schaumstoff mit einer Rohdichte von 35 kg/$m^3$, der nach DIN 4102 in die Brandklasse B2 eingestuft wird.

Der Schaumstoff kann z. B. zu Dämmplatten und Rohrhalbschalen weiterverarbeitet werden.

### Beispiel 11

Es wird wie in Beispiel 10 gearbeitet, indem der dort verwendete Katalysator gemäß Beispiel 3b ersetzt wird. Die Startzeit beträgt 100 Sekunden, die Abbindezeit 300 Sekunden. Der Schaumstoff ist homogen und zeigt keine Farbschattierungen.

## Patentansprüche

1. Verfahren zur Herstellung von Isocyanuratgruppen und gegebenenfalls Urethangruppen aufweisenden Kunststoffen einschließlich Schaumstoffen durch Trimerisierung von Polyisocyanaten mit Hilfe von Isocyanat-Trimerisationskatalysatoren, gegebenenfalls in Gegenwart von Treibmitteln, Schaumstabilisatoren und weiteren Zusatzstoffen, gegebenenfalls in Gegenwart eines Unterschusses von mindestens zwei Hydroxylgruppen aufweisenden Polyhydroxylverbindungen vom Molekulargewicht 400 bis 10 000, sowie gegebenenfalls Kettenverlängerungsmitteln mit einem Molekulargewicht von 32 bis 400, dadurch gekennzeichnet, daß als Trimerisierungskatalysatoren Phosphonate der allgemeinen Formel

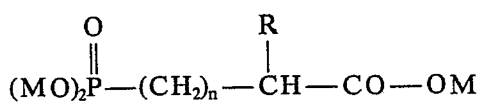

in der

n eine ganze Zahl von 1—3,
R H oder $-(CH_2)m-COOM$,
m eine ganze Zahl von 0—3,
M ein Alkalimetall, bevorzugt Na oder K, oder $NR'_4$,
R' H oder ein $C_1-C_4$-Alkylrest ist,

und/oder der allgemeinen Formel

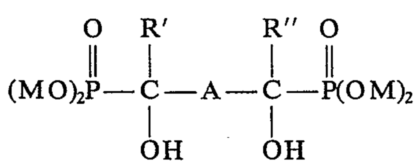

in der

A $-(CH_2)_x-$ oder $C_6-C_{10}$-Arylen,
x eine ganze Zahl von 0—5,
R' und R'' gleich oder verschieden sind und H oder einen $C_1-C_4$-Alkylrest und
M ein Alkalimetall, bevorzugt Na oder K, oder $NR'_4$ darstellen,

verwendet werden.

2. Phosphonate der allgemeinen Formel

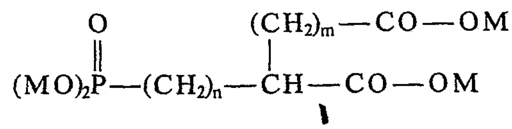

in der

n eine ganze Zahl von 1—3,
m eine ganze Zahl von 0—3,
M ein Alkalimetall, bevorzugt Na oder K, oder $NR'_4$
R' H oder ein $C_1-C_4$-Alkylrest ist.

3. Phosphonate der allgemeinen Formel

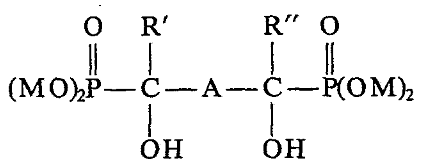

in der

A $-(CH_2)X$ oder $C_6-C_{10}$-Arylen, bevorzugt Phenylen,
x eine ganze Zahl von 0—5,
R' und R'' gleich oder verschieden sind und H oder einen $C_1-C_4$-Alkylrest und
M ein Alkalimetall, bevorzugt Na oder K, oder $NR'_4$ darstellen.

## Claims

1. Process for the production of synthetic resins containing isocyanurate groups and optionally urethane groups, including foam resins, by the trimerisation of polyisocyanates with the aid of isocyanate trimerisation catalysts, optionally in the presence of blowing agents, foam stabilizers and other additives, optionally in the presence of a less than equivalent quantity of polyhydroxyl compounds with molecular weights of from 400 to 10 000 which have at least two hydroxyl groups and optionally chain lengthening agents with a molecular weight of from 32 to 400, characterised in that the trimerisation catalysts used are phosphonates corresponding to the following general formula:

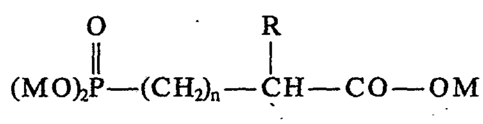

in which

n represents an integer from 1—3,
R represents H or $-(CH_2)_m-COOM$,
m represents an integer from 0 to 3,
M represents an alkali metal, preferably Na or K, or $NR'_4$ wherein R' represents H or a $C_1-C_4$-alkyl group

and/or to the following general formula

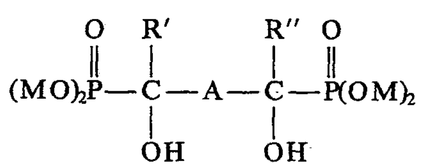

in which

A represents $-(CH_2)_x-$ or $C_6-C_{10}$-arylene,
x represents an integer from 0—5,
R' and R'', which may be the same or different, represent H or a $C_1-C_4$-alkyl group, and
M represents an alkali metal, preferably Na or K, or $NR'_4$.

2. Phosphonates corresponding to the following general formula:

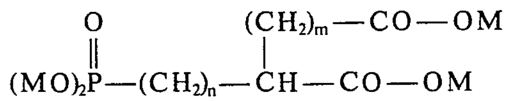

in which

n represents an integer from 1—3,
m represents an integer from 0—3,
M represents an alkali metal, preferably Na or K, or $NR'_4$, and
R' represents H or a $C_1$—$C_4$-alkyl group.

3. Phosphonates corresponding to the following general formula:

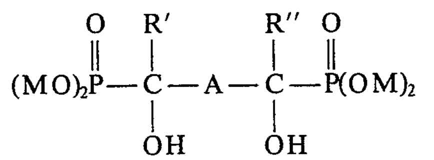

in which

A represents $—CH_2)_x$ or $C_6$—$C_{10}$-arylene (preferably phenylene),
X represents an integer from 0—5,
R' and R'', which may be the same or different, represent H or a $C_1$—$C_4$-alkyl group, and
M represents an alkali metal, preferably Na or K, or $NR'_4$.

**Revendications**

1. Procédé de production de matières plastiques portant des groupes isocyanurate et, le cas échéant, des groupes uréthanne, y compris des mousses, par trimérisation de polyisocyanates à l'aide de catalyseurs de trimérisation d'isocyanates, éventuellement en présence de porogènes, d'agents de stabilisation des mousses et d'autres additifs, le cas échéant en présence d'une quantité insuffisante de composés polyhydroxyliques porteurs d'au moins deux groupes hydroxyle, de poids moléculaire allant de 400 à 10 000, de même que, le cas échéant, d'agents d'allongement de chaîne ayant un poids moléculaire de 32 à 400, caractérisé en ce qu'on utilise comme catalyseurs de trimérisation des phosphonates de formule générale:

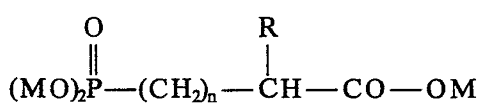

dans laquelle

n est un nombre entier de 1—3,
R représente H ou un groupe $—(CH_2)_m—COOM$,
m est un nombre entier de 0—3,
M est un métal alcalin, de préférence Na ou K, ou un groupe $NR'_4$,
R' représente H ou un reste alkyle en $C_1$ à $C_4$,

et/ou de formule générale:

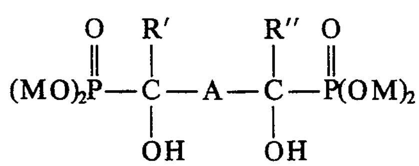

dans laquelle

A est un groupe $—(CH_2)_x—$ ou arylène en $C_6$ à $C_{10}$,
x est un nombre entier de 0 à 5,
R' et R'' sont égaux ou différents et représentent H ou un reste alkyle en $C_1$ à $C_4$, et
M est un métal alcalin, de préférence Na ou K, ou un groupe $NR'_4$.

2. Des phosphonates de formule générale:

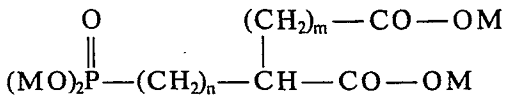

dans laquelle

n est un nombre entier égal à 1—3,
m est un nombre entier égal à 0—3,
M est un métal alcalin, de préférence Na ou K, ou un groupe $NR'_4$
R' représente H ou un reste alkyle en $C_1$ à $C_4$.

3. Des phosphonates de formule générale:

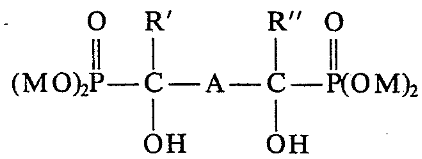

dans laquelle

A est un nombre $-(CH_2)_x$ ou arylène en $C_6$ à $C_{10}$, de préférence phénylène,
x est un nombre entier égal à 0—5,
R' et R'' sont égaux ou différents et représentent H ou un reste alkyle en $C_1$ à $C_4$, et
M est un métal alcalin, de préférence Na ou K, ou un groupe $NR'_4$.